# EUROPEAN PATENT SPECIFICATION

(11) **EP 0 559 484 B1**
(45) Date of publication and mention of the grant of the patent: **23.12.1998**
(21) Application number: 93301681.8
(22) Date of filing: 05.03.1993
(51) Int. Cl.: B32B 27/32

(54) **Polymeric films**
Polymerfilme
Films polymères

(30) Priority: 06.03.1992 GB 9204848
(43) Date of publication of application: 08.09.1993
(73) Proprietor: COURTAULDS FILMS (HOLDINGS) LIMITED, Bridgwater Somerset TA6 4PA (GB)
(72) Inventor: Foulkes, Jonathan Paul, Thornbury, Bristol BS12 2DS (GB)
(74) Representative: Claisse, John Anthony, Dr.

(56) References cited:
- EP-A- 0 312 226
- EP-A- 0 312 289
- EP-A- 0 367 613
- EP-A- 0 388 086
- DE-U- 8 904 415

## Description

This invention concerns polymeric films, and in particular polymeric films for in-mold labelling.

The process of in-mold labelling involves the introduction of a label into a mold followed by the molding of a polymeric substrate in the mold so that the substrate conforms to the shape of the mold and the label becomes adhered to and incorporated into the surface of the molded substrate in the process. Elevated temperatures are used during the molding process which are sufficient to enable the polymeric substrate to be shaped to that of the mold, but these temperatures often have an adverse affect on polymeric labels causing them to shrink and/or distort. Furthermore, air can become trapped between the label and the polymeric substrate during the molding process, and this can lead to undesirable effects such as incomplete adhesion of the label to the molded substrate. Furthermore, in-mold labelling using large labels, and especially when such labels extend around the edges of the moldings, often gives rise to difficulties with adhesion of the labels over their complete surface.

A number of proposals have been made hitherto to overcome these problems associated with in-mold labelling. These attempts can be broadly divided into those which provide the label with a rough surface next to the polymeric substrate so that air can more easily escape from between them during the molding process, those which provide a stress compensating layer which in effect acts as a layer of lubricant between an outer layer of the label and the polymeric substrate as the substrate is molded, thereby reducing the distortion of the outer layer of the label during the molding process by allowing the label more easily to shrink during the process, and those which use labels having perforations to allow air to pass through the labels.

The various prior art proposals for in-mold labels suffer with a variety of disadvantages, the major disadvantage with many of the labels being that they are complicated multi-layer structures often including a number of mono- and bi-axially oriented polymeric layers laminated together to form composites which are expensive to produce. This is especially true of many of the prior art proposals for labels having rough outer surfaces, and even in the case of those labels having stress compensating layers produced by the simultaneous co-extrusion of the various film layers, the stress compensating layers are produced from relatively expensive polymers. Other proposals involve the use of relatively expensive adhesives, for example ethylene/vinyl acetate copolymer, and film perforation to allow air to escape adds a further processing step and therefore involves additional costs.

According to the present invention there is provided a polymeric film comprising a coextruded, biaxially oriented polymer web comprising a first layer which forms an outer surface of the film and comprises polyethylene containing from 10 to 50 % by weight of a particulate filler having a mean particle size greater than the thickness of the first layer, and a second layer coextensive with the said first layer and comprising a voided propylene homopolymer.

In use, the first layer will usually form the surface of an in-mold label which contacts the polymeric substrate which is molded in the mold. The second layer will, therefore, usually have at least one further polymeric layer thereon. Typically the at least one further polymeric layer will be printable and/or metallizable.

The first layer of polyethylene containing a particulate filler preferably consists of from 65 to 90 percent by weight of polyethylene containing from 10 to 50, preferably less than 30, and advantageously about 20 percent by weight of a particulate filler. Excessive amounts of filler are undesirable as they can lead to a loss of integrity of the filled layer. Furthermore, low polyethylene contents may lead to inadequate film shrinkage when the film is subjected to in-mold labelling.

The polyethylene is preferably substantially amorphous, and it can be a low density polyethylene or a linear low density polyethylene, the melt flow index of the polyethylene preferably being at least 2 and more particularly at least 5g/10mins as measured by ASTM D 1238 condition E. The particulate filler, which is preferably inorganic, preferably has a mean particle size of from 1 to 30µm, the filler preferably being calcium carbonate.

The second layer, which consists of voided polypropylene, preferably consists of from 97 to 90 percent by weight of a propylene homopolymer, and from 3 to 10 percent by weight of a voiding agent which can be organic or inorganic. It is essential that the second layer should be voided in order to allow it to shrink during in-mold labelling. Thus insufficient voiding may lead to difficulties in achieving a good label following in-mold labelling. However, as the degree of voiding increases, so the labels tend to acquire more of a leathery appearance.

The voiding agent can be organic or inorganic, the mean particle size of the voiding agent preferably being from 1 to 10µm. A preferred voiding agent for the second layer is particulate chalk.

The first polymer layer can include other polymeric materials, for example in amounts of up to 15 percent by weight, eg copolymers containing units derived from at least two of ethylene, propylene and but-1-ene.
Propylene/ethylene copolymers containing low percentages by weight of units derived from ethylene, eg about 4 percent by weight of ethylene, are particularly preferred.

Polymeric films of the present invention can be subjected to in-mold labelling to a variety of polymeric substrates, a preferred polymer for such substrates being high density polyethylene.

The outer surface of the at least one further polymeric layer is preferably printable and/or metallizable, and any of a variety of polymeric materials can be used to from such surfaces. Examples of polymeric materials which can be used include copolymers containing units derived from at least two of ethylene, propylene and but-1-ene, propylene/ethylene copolymers containing low percentages by weight of units derived from ethylene, eg about 4 percent by weight of ethylene being particularly preferred.

If desired, a single further polymeric layer can include at least one pigment, the presence of a pigment usually serving to improve the visual appearance of the film after it has been subjected to in-mold labelling by reducing any leathery appearance that may be imparted to the labels after shrinkage during the in-mold labelling process. Examples of pigments which can be used include organic or inorganic pigments, titanium dioxide being especially preferred. The amount of pigment in the further polymeric layer can be varied, but the amount present should not significantly adversely affect the printability of the further polymeric layer when printability is desired. Typically from 10 to 20 percent by weight of pigment can be present.

As an alternative to a single polymeric layer on the second layer, films of the present invention can include two or more layers on the said second layer. For example, it is particularly preferred to use two layers, the layer coextensive with the said second layer being pigmented, eg to mask any leathery appearance acquired by the second layer following in-mold labelling, with the outer layer coextensive with the pigmented layer being of a non-pigmented heat sealed polymer, for example as described above for the further polymeric layers. The pigmented layer is preferably formed from a propylene homopolymer, this often imparting a high gloss to the film surface. Pigments which can be used include those described above for single layers.

In order to improve the printability and/or metallizability of the further polymeric layer or layers, the outer surface formed by the further layer or layers will usually be subjected to a treatment which increases its surface energy, for example flame treatment or corona discharge treatment. When such treatments are effected, they will in general be carried out on the film before in-mold labelling is effected.

Films of the present invention can be produced by known methods, it generally being preferred initially to coextrude the necessary materials to from the various layers through a slot die to form a multi-layer web which is then sequentially biaxially stretched, stretching in the direction of extrusion being over heated rollers rotating at different peripheral speeds followed by transverse stretching in a stenter oven. Surface treatment to improve printability of the resultant films will usually be effected after stretching the web in the transverse direction and before wind-up.

The thicknesses of the various layers of films of the present invention can be varied within wide limits. However, the overall thickness of the films will usually be from 50 to 150µm. In general, films of the present invention will be thicker than films used for packaging purposes, for example heat sealable films for forming heat sealed packages around packaged articles, in order to have sufficient stiffness to be located satisfactorily in the mold in which in-mold labelling is effected.

The voided polypropylene layer will usually represent a major proportion of the thickness of films of the present invention, and it will usually be from about 49 to about 159µm thick. The layer of filled polyethylene will usually be considerably thinner than the voided layer, typically being from 1 to 10µm thick. However, it is generally preferred to use relatively thick polyethylene layers within this range, and especially combined with filler particles being significantly larger than the preferred minimum specified herein, eg it is preferred to use chalk of mean particle size of about 10µm in a polyethylene layer having a thickness of about 6µm. The optional further polymeric layer or layers will also usually represent only a minor proportion of the overall thickness of the film, for example a total of from 0.8 to 20µm. However, when single polymeric layers are used, for example in the form of heat sealable layers, they will usually not exceed 5µm in thickness, but when two layers are used, it is preferable to have a heat sealable layer of up to 5µm in thickness and beneath that layer a relatively thick intermediate layer, for example of a propylene homopolymer, having a thickness of up to 15µm. Such thick intermediate layers in general provide the film surface with good gloss.

The following Examples are given by way of illustration only. All percentages are by weight unless stated otherwise.

### Example 1

A three-layer polymeric web was produced by coextruding through a slot die a core layer of a mixture of 85 percent of a propylene homopolymer, 5 percent of a chalk having a mean particle size of about 3.5µm, and 10 percent of titanium dioxide, with a layer of a blend of 80 percent of linear low density polyethylene (melt flow index 7g/10min as measured by ASTM D 1238 condition E) and 20 percent of chalk (mean particle size about 3.5µm) on one side of the core layer, and a layer of a propylene/ethylene copolymer containing 4 percent by weight of units derived from ethylene.

The three layer web was then stretched 4.5 times in the direction of extrusion by passing the web over rollers heated to 120°C, and then 10 times in the transverse direction in a stenter oven at 158°C.

The resulting biaxially stretched film was cooled to ambient temperature and the surface formed by the propylene/ethylene copolymer was then subjected to corona discharge treatment to improve its printability. The film was then wound up. This film had an overall thickness of 60µm, the core layer being 54µm thick, the filled polyethylene layer being 5µm thick, and the propylene/ethylene copolymer layer being 1µm thick.

Samples of this film were then subjected to in-mold labelling on to a high density polyethylene parison which was blown into a mold at 190°C containing a sample of the film. On removal of the blown article from the mold, the label formed by the film of the present invention had adhered satisfactorily to the article and it had a satisfactory appearance.

### Example 2 (comparison)

A biaxially stretched three-layer polymeric film was produced as in Example 1, except that the chalk was omitted from the polyethylene layer. When the resulting film was used for in-mold labelling as described in Example 1, it gave unsatisfactory results showing high shrinkage combined with air trapped between the film and the molding. In addition, the wall thickness of the molded article was uneven in the vicinity of the label.

### Example 3 (comparison)

A biaxially stretched three-layer polymeric film was produced as in Example 1, except that the chalk was omitted from both the polyethylene layer and the layer of the propylene homopolymer. The resulting film, which was unvoided in any of its layers, was subjected to in-mold labelling as described in Example 1. The film showed high shrinkage combined with poor adhesion to the molding.

## Claims

1. A polymeric film comprising a coextruded, biaxially oriented polymer web comprising a first layer which forms an outer surface of the film and comprises polyethylene containing from 10 to 50 % by weight of a particulate filler having a mean particle size greater than the thickness of the first layer, and a second layer coextensive with the said first layer and comprising a voided propylene homopolymer.

2. A film according to claim 1, including at least one further polymeric layer coextensive with the second layer.

3. A film according to claim 2, wherein the outer surface of the at least one further polymeric layer is printable and/or metallizable.

4. A film according to claim 2 or claim 3, wherein the at least one further polymeric layer comprises a layer of a propylene homopolymer on the said second layer and a layer of a heat sealable and/or metallizable polymer on the propylene homopolymer layer.

5. A film according to any of the preceding claims, wherein the polyethylene of the said first layer is substantially amorphous.

6. A film according to any of the preceding claims, wherein the polyethylene of the said first layer comprises low density polyethylene or a linear low density polyethylene.

7. A film according to any of the preceding claims, wherein the particulate filler in the said first layer has a mean particle size of from 1 to 30µm.

8. A film according to any of the preceding claims, wherein the said second layer comprises from 97 to 90 percent by weight of a propylene homopolymer and from 3 to 10 percent by weight of a voiding agent.

9. A film according to any of the preceding claims, wherein the said first layer includes other polymeric materials in addition to the polyethylene.

10. A film according to any of the preceding claims in the form of a label.

## Patentansprüche

1. Polymerfolie, **gekennzeichnet durch** eine coextrudierte, biaxial orientierte Polymerbahn, die eine erste Schicht, die eine Außenoberfläche der Folie bildet und Polyethylen mit einem Gehalt von 10 - 50 Gew% eines aus Partikeln bestehenden Füllstoffes enthält, dessen mittlere Teilchengröße größer als die Schichtdicke der ersten Schicht ist, und eine zweite Propylen-Homopolymer mit Vakuolen enthaltende Schicht aufweist, die sich entlang der ersten Schicht erstreckt.

2. Folie nach Anspruch 1 **dadurch gekennzeichnet**, daß sie noch mindestens eine weitere Polymerschicht aufweist, die sich entlang der zweiten Schicht erstreckt.

3. Folie nach Anspruch 2, **dadurch gekennzeichnet**, daß die Außenoberfläche der mindestens einen weiteren Polymerschicht bedruckbar und/oder metallisierbar ist.

4. Folie nach Anspruch 2 oder 3, **dadurch gekennzeichnet**, daß die mindestens eine weitere Polymerschicht eine Propylen-Homopolymerschicht auf der zweiten Schicht und eine Schicht aus heißsiegelbarem und/oder metallisierbarem Polymer auf der Propylen-Homopolymerschicht aufweist.

5. Folie nach einem der vorhergehender Ansprüche, **dadurch gekennzeichnet**, daß das Polyethylen der ersten Schicht im wesentlichen amorph ist.

6. Folie nach einem der vorhergehenden Ansprüche, **dadurch gekennzeichnet**, daß das Polyehtylen der ersten Schicht ein Polyethylen niederer Dichte oder ein lineares Polyethylen niederer Dichte umfaßt.

7. Folie nach einem der vorhergehenden Ansprüche, **dadurch gekennzeichnet**, daß der Partikelfüllstoff der ersten Schicht eine mittlere Teilchengröße von 1 - 30 µm aufweist.

8. Folie nach einem der vorhergehenden Ansprüche, **dadurch gekennzeichnet**, daß die zweite Schicht 97 - 90 Gew% Propylen-Homopolymer und 3 - 10 Gew% eines Vakuolen bildenden Mittels umfaßt.

9. Folie nach einem der vorhergehenden Ansprüche, **dadurch gekennzeichnet**, daß die erste Schicht weitere polymere Materialien zusätzlich zum Polyethylen enthält.

10. Folie nach einem der vorhergehenden Ansprüche, **dadurch gekennzeichnet**, daß sie in Form eines Etiketts vorliegt.

## Revendications

1. Film polymère comprenant une nappe polymère coextrudée à orientation biaxiale, comprenant une première couche qui forme une surface extérieure du film, et comprend du polyéthylène contenant de 10 à 50 % en poids d'une charge particulaire ayant une granulométrie moyenne supérieure à l'épaisseur de la première couche, et une deuxième couche, s'étendant avec ladite première couche, et comprenant un homopolymère du propylene contenant des vides.

2. Film selon la revendication 1, comprenant au moins une autre couche polymère s'étendant avec la deuxième couche.

3. Film selon la revendication 2, dans lequel la surface extérieure de l'autre couche polymère est apte à recevoir une impression ou un dépôt métallique.

4. Film selon la revendication 2 ou 3, dans lequel l'autre couche polymère comprend une couche d'un homopolymère de propylène sur ladite deuxième couche, et une couche d'un polymère thermoscellable et/ou apte à recevoir un dépôt métallique, sur la couche de l'homopolymère de propylène.

5. Film selon l'une quelconque des revendications précédentes, dans lequel le polyéthylène de ladite première couche est essentiellement amorphe.

6. Film selon l'une quelconque des revendications précédentes, dans lequel le polyéthylène de ladite première couche comprend du polyéthylène basse densité ou un polyéthylène linéaire basse densité.

7. Film selon l'une quelconque des revendications précédentes, dans lequel la charge particulaire se trouvant dans ladite première couche a une granulométrie moyenne de 1 à 30 µm.

8. Film selon l'une quelconque des revendications précédentes, dans lequel ladite deuxième couche comprend de 97 à 90 % en poids d'un homopolymère de propylène et de 3 à 10 % en poids d'un agent de formation de vides.

9. Film selon l'une quelconque des revendications précédentes, dans lequel ladite première couche comprend d'autres matériaux polymères en plus du polyéthylène.

10. Film selon l'une quelconque des revendications précédentes, se présentant sous forme d'une étiquette.
